# FASCICULE DE BREVET EUROPEEN

(11) **EP 3 583 033 B1**
(45) Date de publication et mention de la délivrance du brevet: **16.03.2022**
(21) Numéro de dépôt: 18754134.7
(22) Date de dépôt: 16.02.2018
(51) Int. Cl.: B64F 5/10, B05B 12/24, B65H 75/10

(54) **FILM POUR MASQUER DES COMPOSANTS D'AÉRONEF ET MÉTHODE DE DÉPLOIEMENT**
FOLIE ZUR MASKIERUNG VON FLUGZEUGKOMPONENTEN UND VERFAHREN ZUR POSITIONIERUNG DAVON
FILM FOR MASKING AIRCRAFT COMPONENTS AND METHOD OF POSITIONING SAME

(30) Priorité: 17.02.2017 US 201762460182 P
(43) Date de publication de la demande: 25.12.2019
(73) Titulaire: ADHETEC CANADA INC., Drummondville QC 2JC 7W9 (CA)
(72) Inventeur: BEAUDOIN, Diane, Drummondville Québec J2B 8Y7 (CA)
(74) Mandataire: Lavoix
(86) Numéro de dépôt international: PCT/CA2018/050175
(87) Numéro de publication internationale: WO 2018/148836

(56) Documents cités:
- EP-A1- 0 782 912
- WO-A1-2005/068294
- FR-A1- 2 617 124
- US-A- 5 096 761
- US-A1- 2004 166 298

## Description

### RÉFÉRENCE ET REVENDICATION DE PRIORITÉ

La présente demande revendique la priorité de la demande provisoire US 62/460.182 déposée le 17 février 2017.

### DOMAINE TECHNIQUE

Le domaine technique de l'invention concerne des films conditionnés et des méthodes de déploiement de ces films pour masquer des composants, des pièces ou des sections d'aéronef lors d'opérations de peinture et de finition. Les films de masquage sont fabriqués sur mesure pour différents types d'aéronefs.

### ÉTAT DE LA TECHNIQUE

En général, dans le domaine des pièces de grande taille à protéger comme des composants d'aéronef (i.e. des pièces ou des sections d'aéronef), le masquage est réalisé de façon traditionnelle à l'aide d'un masque fait de rouleaux de papier brun ou de plastique souple ou de Tyvek ^{®} à structure souple, installé et/ou déroulé autour du composant à protéger et fixé à l'aide de ruban adhésif. Le ruban adhésif sert à la fois à fixer le masque sur la surface du composant de l'aéronef ainsi qu'à jointer les portions du masque entre elles. Cette méthode comporte des inconvénients en regard (1) au temps et ressources requis pour envelopper et/ou masquer les composants d'aéronef et/ou dérouler les rouleaux de matériel de masquage et jointer les liserés ensemble, (2) au risque d'abîmer les surfaces d'aéronef lors de la découpe du masque afin d'ajuster la dimension du matériel de masquage à la section du composant d'aéronef à couvrir, et (3) aux dommages pouvant être causés à la surface de l'aéronef lors du retrait du masque qui peut nécessiter un démantèlement en le sectionnant à l'aide de couteaux ou outils à lames coupantes. Le document EP 0 782 912 décrit un rouleau de film enroulé autour d'un tube. Le document WO 2005/068294 décrit une couverture pour une aile d'avion.

En vue de ce qui a été mentionné ci-dessus, il y a donc un besoin pour un film pour masquer un composant d'aéronef et une méthode de déploiement de ce film qui est capable de surmonter ou au moins minimiser au moins un inconvénient de l'art antérieur.

### SOMMAIRE

Selon un aspect général, l'invention concerne un film pour masquer un nez d'aéronef selon la revendication 1.

Selon un autre aspect général, l'invention concerne un film pour masquer un fuselage d'aéronef selon la revendication 2.

Selon un autre aspect général, l'invention concerne un film pour masquer une aile d'aéronef selon la revendication 3.

Les revendications dépendantes indiquent des modes de réalisation particuliers de l'invention.

Selon un autre aspect général, l'invention concerne une méthode de déploiement d'un film pour masquer un nez d'aéronef selon la revendication 20.

Selon un autre aspect général, l'invention concerne une méthode de déploiement d'un film pour masquer un fuselage d'aéronef selon la revendication 21.

Selon un autre aspect général, l'invention concerne une méthode de déploiement d'un film pour masquer une aile d'aéronef selon la revendication 22.

Dans une réalisation, l'invention concerne un kit selon la revendication 16.

Dans une réalisation, l'élément guide est rigide.

Dans une réalisation, le kit comprend un mode d'emploi pour le déploiement du film.

### BRÈVE DESCRIPTION DES FIGURES

La Figure 1A illustre une vue de profil et en plan d'un aéronef, les directions longitudinale et transversale du fuselage de l'aéronef étant indiquées par les flèches L_{f} et T_{f} respectivement.
La Figure 1B est une vue en plan d'un aéronef, les directions longitudinale et transversale de l'aile de l'aéronef étant indiquées par les flèches Lₐ et Tₐ respectivement.
La Figure 1C illustre une vue de profil et en plan d'un aéronef, les directions longitudinale et transversale du nez de l'aéronef étant indiquées par les flèches L_{nez} et T_{nez} respectivement.
La Figure 1D illustre une vue de profil et en plan d'un aéronef, les directions longitudinale et transversale de la nacelle de l'aéronef étant indiquées par les flèches Lₙₐ et Tₙₐ respectivement.
La Figure 1E est une vue de profil d'une dérive d'aéronef, dont les directions longitudinale et transversale sont indiquées par des flèches L_{d} et T_{d} respectivement.
La Figure 1F est une vue en plan d'un stabilisateur d'aéronef, dont les directions longitudinale et transversale sont indiquées par des flèches Lₛ et Tₛ respectivement.
La Figure 2A est une vue de profil d'un exemple de film pour masquer un composant d'aéronef, illustrant une étape de pliage de type portefeuille à un pli et le pli obtenu.
La Figure 2B est une vue de profil d'un exemple de film pour masquer un composant d'aéronef, illustrant une séquence d'étapes de pliage de type portefeuille à deux plis et les plis obtenus.
La Figure 3A est une vue en plan d'un film pour masquer un fuselage d'aéronef selon un mode de réalisation, illustrant le positionnement des plis pour conditionner le film sur la portion longitudinale avec un type de pliage en accordéon.
La Figure 3B est une vue en plan du film illustré sur la Figure 3A, une fois plié sur la portion longitudinale, illustrant le positionnement des plis en accordéon pour conditionner le film sur la portion transversale.
La Figure 3C est une vue de profil du film illustré sur la Figure 3B illustrant le type de pliage en accordéon.
La Figure 3D est une vue de profil de l'exemple de réalisation du film de la Figure 3C illustrant un pliage subséquent de type portefeuille à un pli avec insertion d'un élément-guide.
La Figure 4A est une vue de profil d'un film pour masquer un composant d'aéronef, illustrant le type de pliage en accordéon.
La Figure 4B est une vue de profil du film illustré sur la Figure 4A, le pliage en accordéon étant suivi d'un pliage de type portefeuille à deux plis.
La Figure 5 est une vue en plan d'un film de type manchon pour masquer une aile d'aéronef selon un mode de réalisation, mis à plat (i.e. en deux dimensions), et illustrant le positionnement des plis pour un type de pliage télescopique dont l'ordre de pliage des plis est illustré par la flèche dans la direction D1.
Les Figures 6A à 6E illustrent la séquence de pliage télescopique du film de la Figure 5.

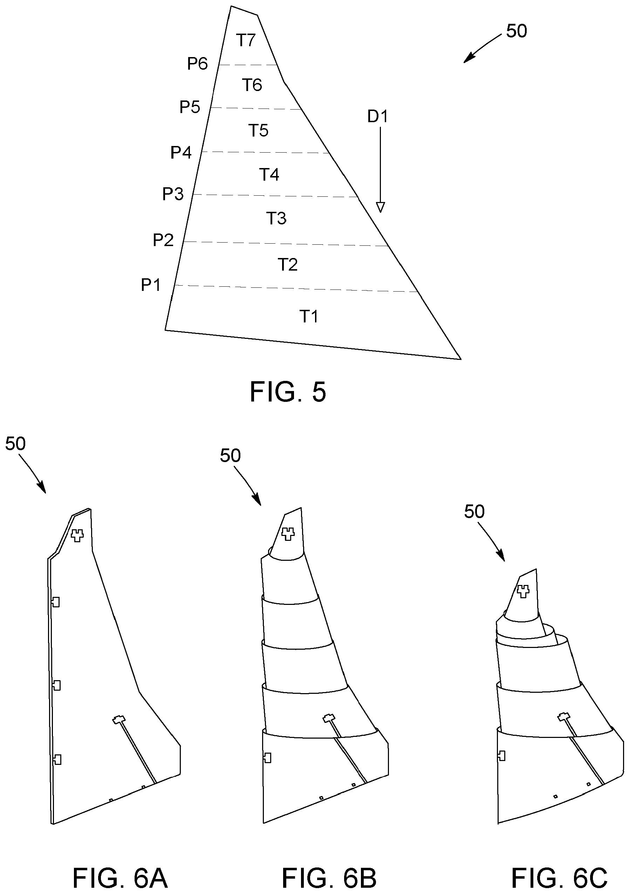

   - La Figure 6A est une vue en perspective du film mis à plat (i.e. en deux dimensions).
   - La Figure 6B est une vue en perspective illustrant la position des plis du pliage télescopique du film.
   - La Figure 6C est une vue en perspective de l'emboîtement de sections du film grâce aux plis télescopiques à partir de l'extrémité T7 du film.

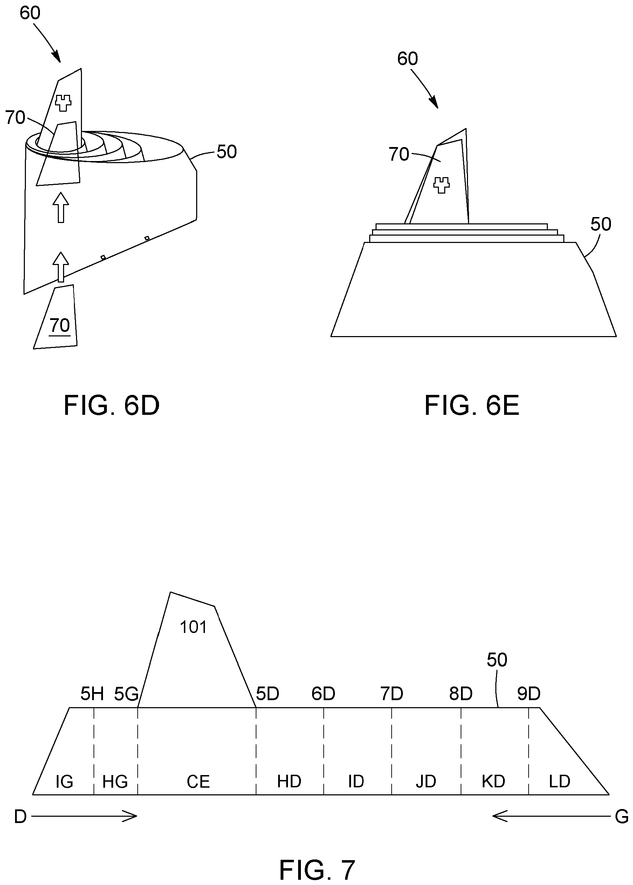

   - La Figure 6D est une vue en perspective du film une fois tous les plis télescopiques emboîtés ainsi que l'insertion d'un élément guide.
   - La Figure 6E est une vue en plan du parallélogramme formé par le film une fois mis à plat (i.e. en deux dimensions) ainsi que la position de l'élément guide.
La Figure 7 est une vue en plan du film illustré sur la Figure 6E, illustrant les plis et les sections pour le type de pliage roulé simple (sections IG et HG) et roulé multiple (sections HD à LD).

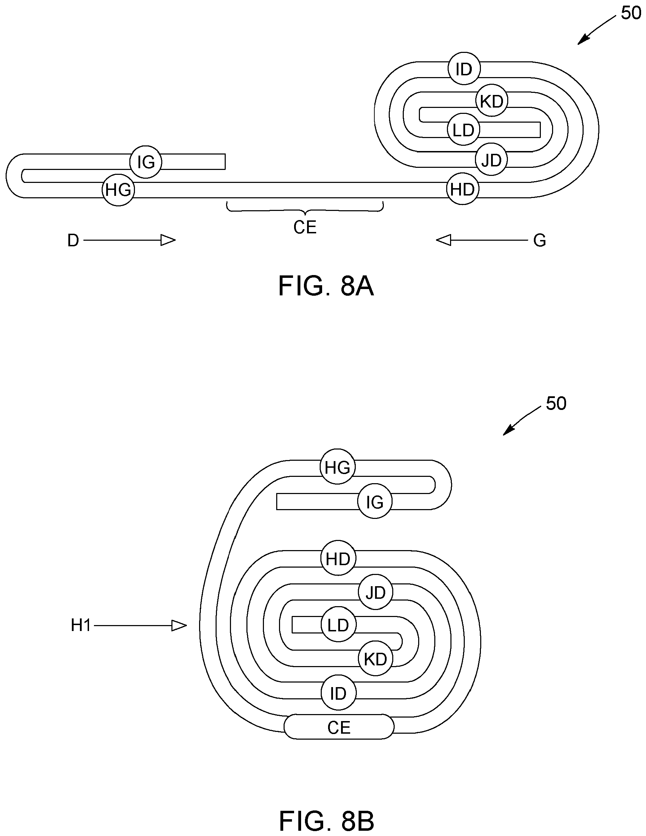

La Figure 8A est une vue de profil du film illustré sur la Figure 7 ayant une portion roulée.
La Figure 8B est une vue de profil du film illustré sur la Figure 8A, le pliage roulé étant suivi d'un pliage en portefeuille.

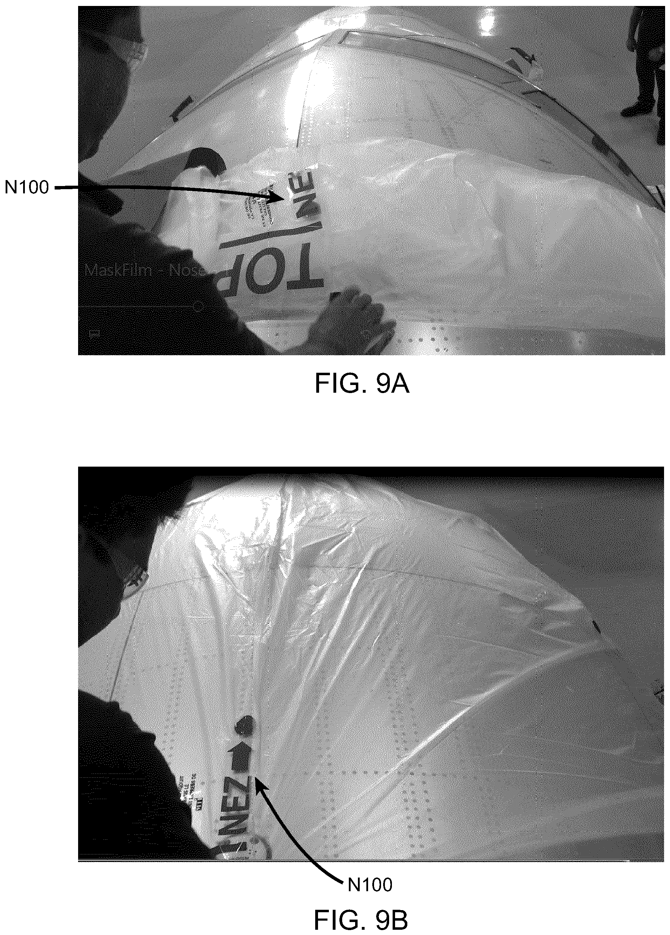

Les Figures 9A et 9B sont des vues en perspective d'un film pour masquer un nez conique d'aéronef selon un mode de réalisation, le film étant positionné sur le nez et comprenant des repères de positionnement.

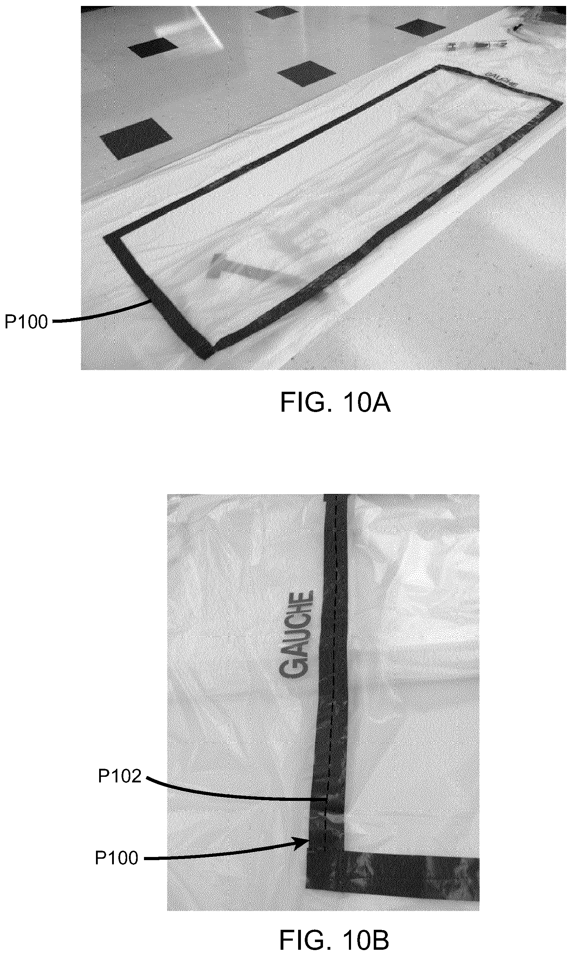

Les Figures 10A et 10B sont des vues en perspective d'un film selon un mode de réalisation, le film comprenant des repères de positionnement qui incluent des rubans contrastants et perforés formant une ligne de déchirement.

### DESCRIPTION DÉTAILLÉE

### Définitions

Le terme « environ » tel qu'utilisé dans la présente demande de brevet réfère à une marge d'erreur de + ou - 15% du nombre associé. Pour des raisons de précision, le mot « environ » lorsqu'utilisé en conjonction avec, par exemple : 100%, signifie 100% +/- 15% i.e. de 85% à 115%.

Le terme « aéronef » est employé pour désigner les avions (de ligne, légers, etc.), les hélicoptères et tout autre type d'aéronef requérant des étapes de finition.

L'expression « composants d'aéronef » est employé pour désigner des pièces, des parties, et des sections d'aéronef, telles un nez, un nez conique, une aile, un stabilisateur, une dérive, une nacelle, etc.

L'expression « masquer » est employé pour qualifier le film qui enveloppe, emballe, protège et recouvre en partie ou en entier, un composant d'aéronef.

Le terme « épouser » est employé pour qualifier le film qui est dimensionné, taillé et configuré pour recouvrir en fonction des dimensions du composant à masquer.

Le terme «conditionné» est employé pour qualifier une action de pliage, roulage, empilage, emballage du film de façon à rendre le transport et l'entreposage possible de celui-ci, une fois emballé, et pour faciliter le déploiement de ce film sur le composant d'aéronef en requérant le minimum de personnel, d'étapes et d'outils. Ce conditionnement spécifique à chaque composant d'aéronef et type d'aéronef a requis une réflexion approfondie et plusieurs années d'expérience pour optimiser le fonctionnement et le déploiement du film conditionné.

Le terme « télescopique » est employé pour qualifier le pliage d'un élément de forme généralement tubulaire qui comprend des côtés scellés. Lorsque trois côtés sont scellés, une extrémité de l'élément est ouverte et une extrémité est fermée. L'élément forme ainsi un tube, un cône, un doigt, une manche, un manchon, un chapeau, un bouchon ou tout autre élément substantiellement tubulaire fermé à une extrémité et ouvert à l'extrémité longitudinalement opposée. Une ou plusieurs sections transversales de l'élément tubulaire sont ensuite pliées de façon à ce que chaque section subséquente s'insère dans une autre section ou vice-versa, tel qu'une personne versée dans l'art peut se l'imaginer pour une antenne ou un télescope (voir Figures 6B à 6D).

### Description détaillée

En référence aux figures, un film pour masquer un composant d'aéronef et une méthode de déploiement de ce film sur un composant d'aéronef seront décrits. Un kit comprenant un film et un élément guide ainsi qu'une méthode de déploiement comprenant l'utilisation du kit sont décrits. Le film, le kit et la méthode de déploiement sont adaptés aux dimensions et aux caractéristiques géométriques des aéronefs ou portions d'aéronefs à masquer.

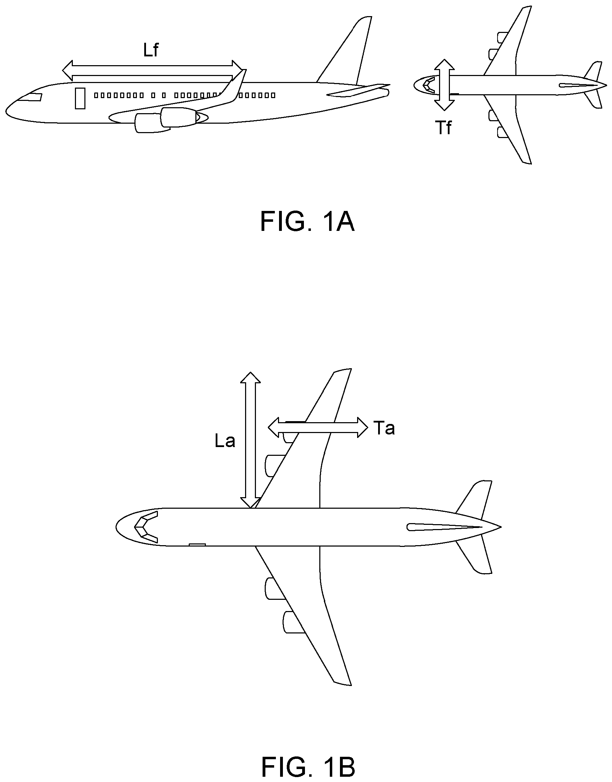

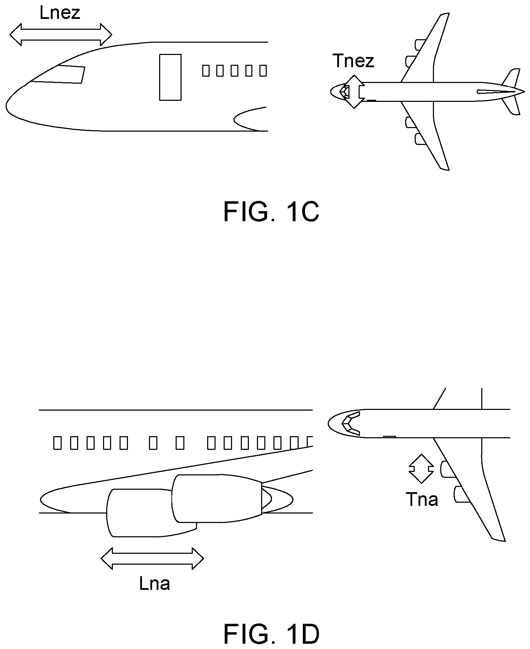

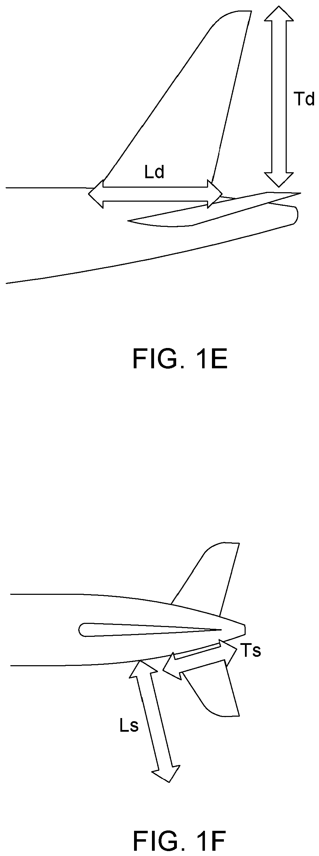

Plus particulièrement, en référence aux Figures 1A à 1F, chaque composant d'aéronef a des dimensions pouvant être mesurées selon les directions longitudinale transversale. Des flèches L et T indiquent les directions longitudinale et transversale pour chaque composant. Plus précisément, sur la Figure 1A, les flèches L_{f} et T_{f} désignent respectivement les directions longitudinale et transversale d'un fuselage d'aéronef. Sur la Figure 1B, les flèches Lₐ et Tₐ désignent respectivement les directions longitudinale et transversale d'une aile d'aéronef. Sur la Figure 1C, les flèches L_{nez} et T_{nez} désignent respectivement les directions longitudinale et transversale d'un nez conique d'aéronef. Sur la Figure 1D, les flèches Lₙₐ et Tₙₐ désignent respectivement les directions longitudinale et transversale d'une nacelle. Sur la Figure 1E, les flèches L_{d} et T_{d} désignent respectivement les directions longitudinale et transversale d'une dérive d'aéronef. Sur la Figure 1F, les flèches Lₛ et Tₛ désignent respectivement les directions longitudinale et transversale d'un stabilisateur d'aéronef. Le film non conditionné, i.e. non plié, comprend une portion longitudinale ayant une dimension correspondante, i.e. se conformant, à la dimension du composant de l'aéronef selon la direction longitudinale, et une portion transversale ayant une dimension correspondant à sa dimension du composant de l'aéronef selon sa direction transversale. Il est apprécié que les dimensions du film peuvent être substantiellement égales aux dimensions du composant ou qu'elles peuvent être substantiellement plus élevées que les dimensions du composant. Il est également apprécié que le film peut recouvrir le composant en partie ou en entier et qu'un seul ou plusieurs films peuvent être utilisés pour recouvrir un composant d'aéronef. Il est également apprécié qu'un film peut recouvrir plusieurs composants d'aéronef. Le film conçu est un objet substantiellement bidimensionnel lorsque mis à plat et est configuré pour recouvrir le composant qui est un objet tridimensionnel.

Dans le domaine de la finition de composants d'aéronef et du masquage requis pour cette finition, la difficulté réside dans le déploiement et la fixation, par une seule personne ou une petite équipe, du film pour recouvrir et protéger les composants généralement de grand gabarit (i.e. plus d'environ 4 mètres de longueur) ou très grand gabarit (i.e. plus de 20 mètres de longueur). Les différents modes de réalisation de film et de méthode de déploiement décrits ci-dessous apportent ainsi une solution à cette problématique en fournissant un film conditionné de masquage de façon à pouvoir l'emballer, le transporter, l'installer et le déployer facilement et de façon intuitive sur les composants d'aéronef par très peu de personnel. Également, les films sont conditionnés pour éviter d'avoir recours à des instruments coupants pour les installer ou les retirer, réduisant ainsi les risques de bris, ou d'égratignures abimant la finition des composants.

L'apport de l'invention réside notamment dans le conditionnement d'un film dont les formes et dimensions sont conformes à celles d'un composant d'aéronef, conçu pour être déployé en trois dimensions pour recouvrir des composants d'aéronefs. Le conditionnement consiste à effectuer plusieurs opérations de pliage, qui sont détaillées ci-dessous. En résumé, le film est mis en forme, i.e. taillé dans un matériau de masquage, puis il est conditionné. Le conditionnement peut aussi inclure l'emballage du film conditionné dans un sac ou dans une boîte pour l'entreposage et/ou le transport.

Le film est fait d'un matériau de masquage ayant notamment des propriétés mécaniques et chimiques permettant le masquage de composants d'aéronef ainsi que la finition de ces composants. Ainsi, il est apprécié que dans un mode de réalisation, le film est perméable à l'air et aux vapeurs de solvant. Dans un mode de réalisation, le film est également imperméable à la peinture, à l'eau et aux solvants. De plus, il est apprécié que le film peut comporter des propriétés permettant l'adhérence d'enduits sur le film sans « floconnage » (i.e. *flaking*), les enduits pouvant être de la peinture ou du vernis. Dans un mode de réalisation, le film a des propriétés antistatiques.

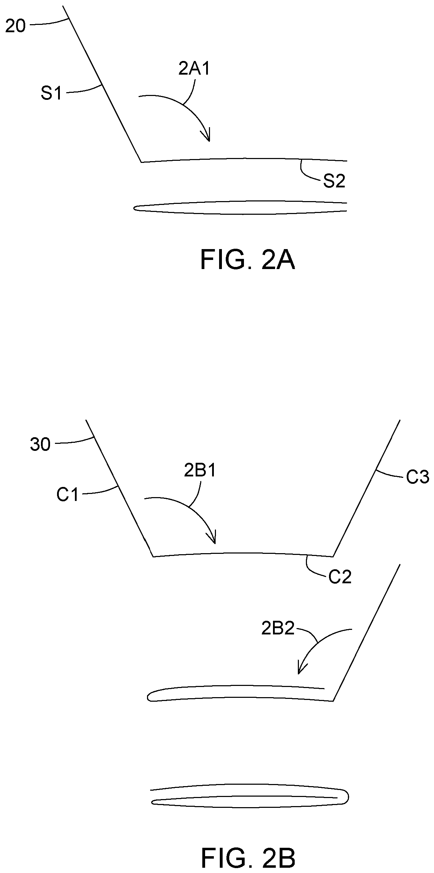

En référence à la Figure 2A, il est montré un type de pliage en portefeuille à un pli. Le film 20 comprend une section S1 et une section S2. La section S1 est repliée sur la section S2 dans une opération de pliage 2A1. Ce type de pli peut également être désigné par l'expression « pli simple ». En référence à la Figure 2B, il est montré un type de pliage en portefeuille à deux plis. Le film 30 comprend une section C1, une section C2 et une section C3. La section C1 est repliée sur la section C2 dans une étape de pliage 2B1, puis la section C3 est repliée sur la section C1 dans une étape de pliage 2B2.

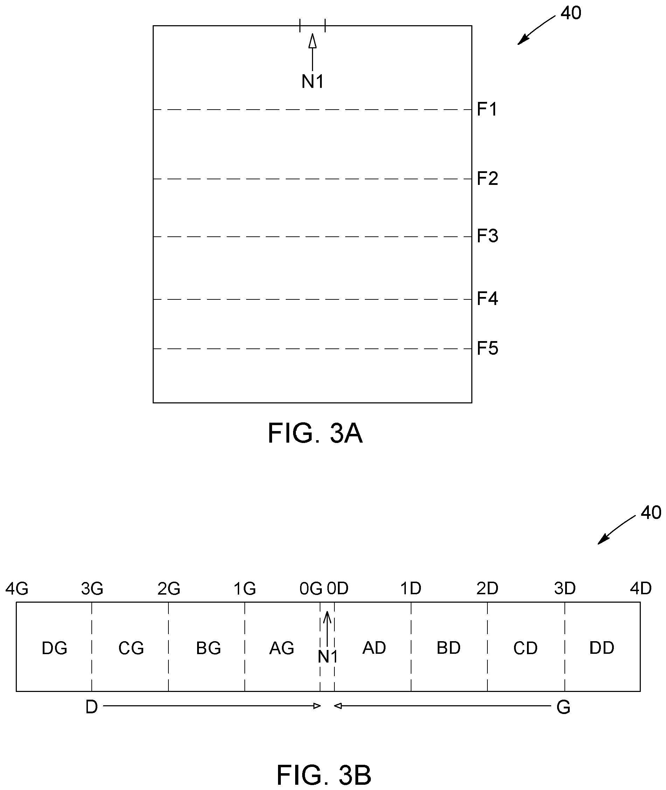

En référence aux la Figures 3A à 4B, il est montré un mode de réalisation d'un film pour masquer un fuselage d'avion. Dans la réalisation illustrée, le film a une forme rectangulaire. Il est apprécié que le fuselage aura des dimensions différentes en fonction du type d'aéronef, et donc le film peut être de forme rectangulaire ou d'autre forme. Il est également apprécié qu'un film ayant une seule couche peut être utilisé et qu'un film ayant plusieurs couches puisse également être utilisé pour masquer un composant d'aéronef tel qu'un fuselage. Dans la réalisation illustrée et tel que décrit ci-dessous, les plis délimitent des sections de film pliées les unes sur les autres selon le type de pliage. La forme et la taille des sections sont donc déterminés par la position des plis. Le type de conditionnement du film de la réalisation illustrée sur la Figure 3A est de type accordéon pour faciliter le déploiement de celui-ci sur le fuselage, le déploiement pouvant être réalisé par une ou deux personnes. Le conditionnement du mode de réalisation de ce film s'effectue en trois étapes. D'abord, la portion longitudinale de ce film 40 est pliée en accordéon selon les plis F1 à F5 de façon à en faire un film empilé de plus petite taille (voir Figure 3B) selon la dimension longitudinale initiale du film. Ensuite, le film 40 est conditionné sur la portion transversale tel que décrit ci-dessous.

La Figure 3B illustre le film de la Figure 3A une fois plié longitudinalement. Pour l'opération de pliage transversal, les sections et plis de la portion gauche du film 40 sont désignés par un « G », tandis que les sections et plis de la portion droite du film sont désignés par un « D ». L'ordonnancement des plis est désigné par un chiffre : 1G, 2G, 3G, et ainsi de suite. Les sections de gauche sont identifiées par DG, CG, BG, et AG et les sections de droite sont identifiées par DD, CD, BD, et AD, alors que les plis sont désignés par 1G, 2G, 3G et 4G pour la section gauche de la vue en plan, et par 1D, 2D, 3D et 4D pour la section droite de la vue en plan. Il est apprécié que le nombre de sections de pliage, et donc de plis, peut varier.

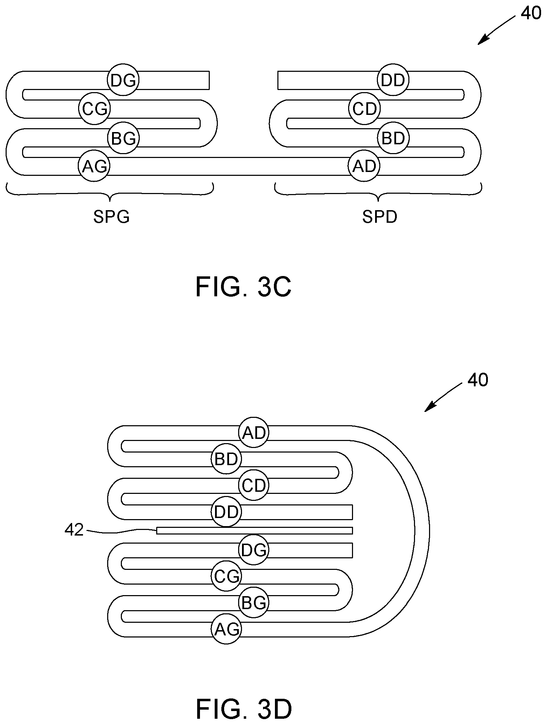

En référence aux Figures 3B et 3C, une première étape pour un pliage de type accordéon consiste, pour la section droite du film 40, à rabattre la section BD sur la section AD selon la direction G en utilisant le pli 1D, à rabattre la section CD sur les sections BD et AD déjà empilées en utilisant selon la direction G le pli 2D, et à rabattre la section DD en utilisant selon la direction G le pli 3D sur les sections CD, BD et AD empilées. Pour la section gauche du film 40, la séquence de pliage en accordéon consiste à rabattre la section BG sur la section AG selon la direction D en utilisant le pli 1G, et à rabattre la section CG selon la direction D le pli 2G sur les sections BG et AG, et enfin à rabattre la section DG en utilisant selon la direction D le pli 3G sur les sections CG, BG et AG empilées. Les plis selon les directions G et D peuvent être réalisés simultanément par deux personnes, ce qui diminue le temps de conditionnement du film 40. Le résultat des opérations de pliage des sections DG, CG, BG et AG et des sections DD, CD, BD, AD tel que présentées en vue en plan à la Figure 3B est illustré à la Figure 3C en tant que sous-pliage gauche SPG et un sous-pliage droit SPD. Pour le mode de réalisation du film 40 partiellement conditionné tel que présenté à la Figure 3C, les deux sections de sous-pliage SPG et SPD reposent côte-à-côte, prêtes pour la dernière opération de pliage simple pour former un film conditionné (Figure 3D) prêt pour l'emballage, le déballage et le déploiement sur le composant d'aéronef. Le dernier pliage simple consiste à replier le sous-pliage droit SPD sur le sous-pliage gauche SPG selon les plis 0D et 0G (Figure 3B) afin d'obtenir le film 40 conditionné illustré à la Figure 3D. Il est apprécié que le dernier pliage simple peut aussi être réalisé en repliant le sous-pliage gauche SPG sur le sous-pliage droit SPD selon les plis 0D et 0G. Dans le mode de réalisation illustré, le film 40 comprend des repères de positionnement N1 pour guider la position du film 40 conformément à la géométrie du fuselage, les repères N1 indiquant l'orientation du nez de l'aéronef (Figures 3A et 3B). Dans le mode de réalisation illustré à la Figure 3D, l'insertion d'un élément guide rigide 42 lors du dernier pli, entre les sous-pliages SPG et SPD, permet de guider le positionnement du film 40 lors de son déploiement sur le composant d'aéronef.

Il résulte que le déploiement du film conditionné selon les étapes de conditionnement décrites ci-dessus est réalisé facilement et de façon intuitive, souvent par une seule personne. Le film complètement conditionné (Figure 3D) est déposé sur une partie supérieure du fuselage et déballé (i.e. retiré de son emballage de transport). Le sous-pliage sur le dessus (SPG ou SPD) de l'autre sous-pliage est déplié, résultant en la configuration du film présentée à la Figure 3C. Les deux sections SPG et SPD sont ensuite étirées afin que leur extrémité respective (section DG et DD) tombe par gravité, et pende de chaque côté du fuselage selon la configuration de la Figure 3B sur laquelle toutes les sections transversales (AG à DG et AD à DD) du film sont déployées. Le film 40 s'étend donc selon la direction transversale T_{f} du fuselage (Figure 1A).

La portion avant, i.e. le « nez » désigné par la flèche et la lettre N1 sur les Figures 3A et 3B, du film partiellement déployé selon la Figure 3B est ensuite partiellement fixée au fuselage au moyen d'un ruban adhésif, ou de tout autre moyen de fixation temporaire, et la portion arrière du film est ensuite étirée par une personne se dirigeant vers l'arrière de l'aéronef selon la direction longitudinale L_{f} du fuselage (Figure 1A). Le film est déployé afin de reprendre son aspect initial présenté à la Figure 3A. Le film ainsi complètement déployé est enroulé autour du fuselage et fixé sur ce dernier pour les opérations de finition.

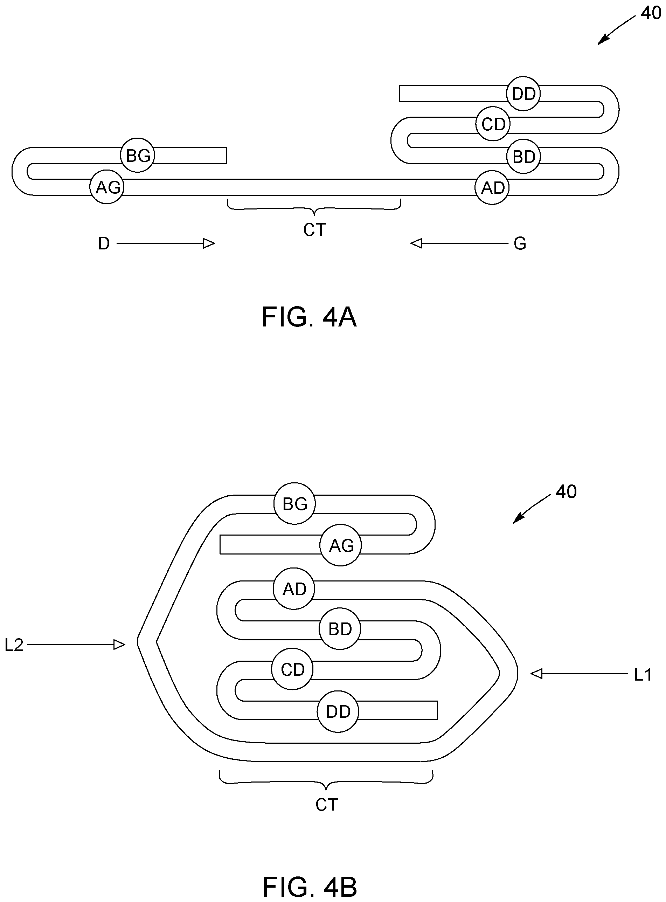

En référence aux Figures 4A et 4B, dans le cas de films pour masquer des composants d'aéronef de grande dimension, les plis sont souvent multiples pour diminuer le volume du paquet, i.e. le film conditionné et empaqueté, pour en faciliter le transport. Selon le mode de réalisation illustré, le conditionnement du film 40 en pliage accordéon et portefeuille requiert tout d'abord trois sections de film: une section gauche comprenant les sections AG et BG, une section centrale CT, et une section droite comprenant les sections AD à DD. Dans un premier temps, le pliage accordéon est réalisé en repliant la section BG sur la section AG, en direction D (pli simple). Les sections DD, CD, BD et AD sont pliées en accordéon, i.e. la section BD est repliée sur la section AD, la section CD est repliée sur la section BD et la section DD est repliée sur la section CD. Il est apprécié que le nombre de plis et le nombre de sections de film varient en fonction de la taille du composant.

En référence à la Figure 4B, le pliage portefeuille à deux plis est dans un deuxième temps réalisé en rabattant la section droite (comprenant les sections AD à DD) selon la direction G (Figure 4A) suivant le pli L1 sur la section centrale CT, et en rabattant la section gauche (comprenant les sections AG et BG) selon la direction D (Figure 4A) suivant le pli L2 sur la section droite tel qu'illustré, ou vice-versa : en rabattant la section gauche dans la direction D sur la section centrale CT, et en rabattant la section droite dans la direction G sur la section gauche. Ce mode de réalisation vise le conditionnement du film 40 pour masquer un fuselage d'aéronef, mais il est apprécié qu'un film pour masquer d'autres composants d'aéronef tels qu'un stabilisateur horizontal, dérive ou aile, peut être conditionné selon ces types de pliage et la séquence de pliage décrite ci-dessus.

En référence aux Figures 5 à 8B, il est montré un mode de réalisation d'un film pour masquer une aile d'avion. Dans la réalisation illustrée, le film a une forme initiale substantiellement similaire à la forme de l'aile d'avion à masquer. Il est apprécié que les ailes auront des dimensions et une forme différente en fonction du type d'aéronef, et donc le film pourra avoir une forme initiale différente de la forme du film illustré à la Figure 5. Le film 50 illustré à la Figure 5 a une forme substantiellement conique pour envelopper une portion de l'aile d'avion et son aileron (i.e. à l'extrémité externe de l'aile). La Figure 5 est une vue en plan du film conique, mis à plat, i.e. en deux dimensions, comportant ainsi deux couches de film, i.e. une couche du film servant à recouvrir le dessus de l'aile, et une couche du film servant à recouvrir le dessous de l'aile. Le film comprend trois extrémités scellées, formant ainsi un tube conique, couvrant ainsi, lorsque déployé sur l'aile, le côté de l'aile longeant le bord d'attaque, le côté de l'aile longeant l'aileron et le côté longeant le saumon de l'aile. Il est apprécié que dans une réalisation alternative, le film comprend une extrémité scellée, par exemple sur l'extrémité longeant le bord d'attaque de l'aile. Dans une autre réalisation alternative, le film comprend deux extrémités scellées formant ainsi un tube ouvert aux extrémités longitudinalement opposées, i.e. extrémités ouvertes correspondant à l'emplanture de l'aile et au saumon de l'aile. Dans la réalisation illustrée aux Figures 6A à 6E, le film est conditionné par le pliage de type télescopique. Les plis sont désignés à la Figure 5 par P1, P2, P3, P4, P5, et P6 et permettent de conditionner le film selon la portion longitudinale de celui-ci. Les sections sont identifiées par T1, T2, T3, T4, T5, T6 et T7.

La séquence d'étapes de pliage télescopique à partir du film 50 de la Figure 5 est illustrée sur les Figures 6A à 6E. La première étape consiste à replier la section T7 (Figure 5), correspondant à l'aileron, partiellement à l'intérieur de la section T6 selon la direction D1 en utilisant le pli P6. Ensuite, les sections T6 et T7 sont repliées dans la section T5 (pli P5), les sections T5, T6 et T7 dans la section T4 (pli P4), et ainsi de suite jusqu'à ce que toutes les sections T1, T2, T3, T4, T5, T6 et T7 (partiellement) se chevauchent (Figure 6E) et forment un empilement de sections formant un parallélogramme, la section T7, i.e. l'extrémité du manchon, s'étendant légèrement à l'extérieur du périmètre du parallélogramme. Tel que mentionné ci-dessus, le film est conditionné sur sa portion longitudinale par le pliage télescopique. Dans la réalisation illustrée, le parallélogramme, i.e. l'empilement des sections, comprend une base qui s'étend substantiellement perpendiculairement à la dimension longitudinale initiale du film tel qu'illustré dans sa position à plat sur la Figure 5.

Dans une réalisation alternative (non illustrée) à celle illustrée aux Figures 6A à 6C, le pliage télescopique est réalisé selon une direction de pliage inverse à la direction D1, et ainsi la section T1 est pliée sur la section T2 en utilisant le pli P1, les sections T1 et T2 sont ensuite pliées sur la section T3 en utilisant le pli P2, et ainsi de suite.

En référence à la Figure 7, il est montré le film des Figures 5 à 6E partiellement conditionné, avant les dernières étapes de pliage précédant l'emballage. La section T7 (Figure 5) du film 50 correspondant à la portion du bout externe de l'aile (i.e. comprenant l'aileron) est désignée par 101 sur la Figure 7, alors que les sections de droite du film comprennent un « D » et les sections de gauche comprennent un « G ». Les sections de gauche sont identifiées par IG et HG, et les sections de droite sont identifiées par HD, ID, JD, KD, et LD. La section centrale CE est placée entre les sections de gauche et les sections de droite. Les sections de gauche et les sections de droite sont ainsi pliées en accordéon en utilisant les plis de la section gauche 5G et 5H et les plis de la section droite 5D à 9D, et il est apprécié que le nombre de sections de pliage, et donc le nombre de plis, varie selon différents modes de réalisation.

En référence aux Figures 8A et 8B, il est montré un mode de réalisation alternatif du film 50 destiné à masquer une aile d'aéronef conditionné tel qu'illustré sur la Figure 7 puis conditionné sur les sections de gauche et de droite suivant un pliage roulé multiple, i.e. IG sur HG vers la direction D et LD sur KD, puis sur JD, puis sur ID et enfin sur HD vers la direction G (Figure 8A). Les sections de gauche et de droite sont ensuite rabattues sur la section centrale CE par un pliage roulé simple selon le pli H1 pour former un film empilé (Figure 8B). Comme dernière étape pour le conditionnement de ce film, la section de l'extrémité du manchon du film est rabattue sur l'empilage de la Figure 8B pour former un film conditionné et prêt à être ensaché pour envoi au centre de finition des aéronefs par exemple.

Dans le mode de réalisation illustré sur les Figures 6D et 6E, un élément guide 70 est inséré à l'intérieur du film 50 jusqu'à l'extrémité du film correspondant au manchon 101 de la Figure 7, cet élément guide 70 correspondant substantiellement aux dimensions de l'aileron et, épousant substantiellement les formes de la section T7 du film 50. Tel que décrit ci-dessous, l'élément guide sert à positionner le film sur le composant d'aéronef à masquer et à guider la personne qui déploie le film sur le composant pour les étapes de déploiement.

Lors du déploiement du film sur un composant d'aéronef, les étapes contraires aux étapes de conditionnement sont effectuées après avoir retiré le film de son sac et d'avoir placé le film empilé sur le composant. Le film empilé est positionné à l'endroit approprié, i.e. dans le cas du nez conique d'aéronef sur la partie supérieure du nez, sur le composant à masquer à l'aide des repères N100 de positionnement dont des exemples sont illustrés sur les Figures 9A et 9B. Sur les Figures 9A et 9B, les repères comprennent le mot « nez » et une flèche indiquant l'orientation du nez de l'aéronef. Les repères permettent le positionnement du film par rapport à des caractéristiques géométriques du composant d'aéronef. Il est apprécié que les repères peuvent comprendre une ou des flèches, le nom d'une partie du composant d'aéronef tel que « nez » ou une orientation « gauche », « droite », « dessus », etc. Il est également apprécié qu'un kit comprenant un film et un élément guide peut être utilisé, l'élément guide guidant les premières étapes de la séquence de déploiement du film sur le composant.

Ainsi, pour un film pour masquer une aile tel qu'illustré à la Figure 5, le déploiement s'effectue tout d'abord en plaçant le film 50 au bout de l'aile. L'extrémité du manchon 101 replié sur le dessus de l'empilage est déployé en premier et glissé sur le bout externe de l'aileron sans toutefois que le reste de l'empilage ne soit nécessairement déployé. Les plis en portefeuille ou roulé de l'empilage sont ensuite déployés de chaque côté de l'aile, i.e. par l'effet de gravité les deux sections de sous-pliage peuvent pendre de chaque côté de l'aile. Le film est donc déployé selon la direction transversale Tₐ (Figure 1B) de l'aile.

Suite au positionnement du film 50 au bout de l'aile, le film est déployé en tirant sur ce dernier selon la direction longitudinale Lₐ (Figure 1B) de l'aile vers le fuselage en dépliant les plis télescopiques. Le film est donc déployé autant sur et sous l'aile tel un gant enveloppant une main. Le premier élément enveloppé par le film étant l'extrémité de l'aile comprenant l'aileron. Il est apprécié que ce type de film et méthode de déploiement peut également s'appliquer à d'autres composants d'aéronef qu'une aile, par exemple aux stabilisateurs ou à la dérive.

Tel que mentionné ci-dessus, un élément guide 70, est inséré dans le manchon 101 durant le conditionnement du film afin de servir d'aide au positionnement du film sur l'aile. Lors du déploiement, l'élément guide 70 permet la localisation du pli dans l'empilage par lequel le film conditionné doit être enfilé par le bout de l'aileron pour le déploiement ultérieur sur l'aile. Cet élément guide peut également indiquer le premier dépliage devant être réalisé lors du déploiement. Par exemple, pour une étape de déploiement de deux sections du film, l'élément guide sera enfilé dans une portion centrale, p.ex. la portion CE à la Figure 7, d'un film devant être déployé de chaque côté d'un composant d'aéronef. L'élément guide est préférablement rigide et de couleur contrastante par rapport au film. Il est apprécié que l'élément guide peut être fait de carton. Il est également apprécié que l'élément guide peut être souple.

Dans le mode de réalisation illustré aux Figures 6D et 6E, un kit 60 comprenant un film 50 pour masquer un composant d'aéronef et un élément guide 70 conditionné avec le film 50 pour le déploiement ultérieur du film 50 sur le composant est fourni.

Un autre mode de réalisation d'un film pour masquer un composant d'aéronef consiste à le conditionner par enroulement sur un mandrin. Ce type de conditionnement consiste à enrouler le film sur sa partie transversale ou longitudinale autour d'un mandrin circulaire. Alternativement, un autre mode de réalisation d'un film est le conditionnement par enroulement du film sur lui-même, sans mandrin. La personne versée dans l'art comprendra que le type de pli et/ou d'enroulement pourra être choisi selon les formes et les dimensions (longueur, largeur, une couche, ou tubulaire (deux couches)) du patron de film en question.

Tel que décrit ci-dessus, le conditionnement des films pour le masquage est réalisé en une combinaison de plusieurs types de pliage ou d'enroulement selon le patron du film en accord avec les formes et dimensions du composant d'aéronef à envelopper. La personne versée dans l'art comprendra qu'il s'agit principalement de pièces de grand gabarit et que la problématique est donc non seulement le conditionnement du film pour son emballage et transport de façon sécuritaire et optimale, mais également le déploiement du film sur l'aéronef tel quel, de façon méthodique afin d'optimiser le temps de masquage du composant et de retrait du film du composant sans engendrer de dommages (e.g. égratignures) au composant d'aéronef.

Dans un mode de réalisation pour envelopper et protéger une aile d'aéronef de grand gabarit, le film est conditionné sur sa portion transversale par une opération de pliage en accordéon et/ou portefeuille et/ou roulé. Ensuite, le film est enroulé sur sa portion longitudinale autour d'un mandrin. Il est apprécié que dans un mode de réalisation alternatif, le film est conditionné sur la portion longitudinale par enroulement sur lui-même, sans mandrin. Il est également apprécié que ces modes de conditionnement peuvent être adaptés pour masquer un composant d'aéronef de petit gabarit.

Dans un mode de réalisation pour envelopper et protéger une aile d'aéronef de grand gabarit, le film est conditionné sur une portion longitudinale du film par une opération de pliage télescopique. Ensuite, le film est conditionné sur sa portion transversale par une opération de pliage roulé et/ou pliage en accordéon et/ou pliage portefeuille.

Dans un mode de réalisation pour l'emballage et la protection d'un stabilisateur horizontal ou une dérive d'aéronef, le film est conditionné sur sa portion longitudinale par une opération de pliage télescopique. Ensuite, le film est conditionné sur sa portion transversale par une opération de pliage de type roulé ou accordéon ou enroulé sur lui-même ou enroulé sur un mandrin.

Dans un autre mode de réalisation de film pour masquer un composant d'aéronef, les repères de positionnement incluent un ou des rubans sur une ou sur les deux faces du film. Tel qu'illustré sur les Figures 10A et 10B, ces rubans P100 peuvent comprendre des pointillés perforés P102 formant une ligne de déchirement. La personne qui déploie le film sur le composant d'aéronef peut ainsi déchirer le film le long des lignes de déchirement pour former des segments de film détachables, permettant ainsi de recouvrir et/ou de contourner certains éléments d'un aéronef tel que décrit ci-dessous. Certains segments peuvent également être détachés complètement du film pour les mettre au rebut lors du déploiement près de certains composants d'aéronef. Il est apprécié que les rubans peuvent être colorés, opaques, translucides, ou imprimés.

Tel qu'illustré sur la Figure 10A, le film sera déchiré pour séparer une partie du film lors du déploiement afin de contourner ou permettre d'y passer des composants d'aéronef telles qu'antennes, base de dérive, trépied de soutien ou autre équipement. Les lignes de déchirement permettent également de pratiquer une ouverture de dimensions et de position prédéterminées, p.ex. pour une porte, dans le film sans l'utilisation d'outil de coupe, selon les composants d'aéronef et leurs caractéristiques géométriques. Tel qu'illustré sur la Figure 10B, les portions de film seront étirées en direction opposée de part et d'autre des côtés des rubans perforés de façon à provoquer un déchirement contrôlé du film. La portion rectangulaire déchirée, située à l'intérieur des rubans sera ainsi retirée, poussée ou soulevée afin d'avoir accès à une porte de l'aéronef lorsque le film est déployé sur le composant d'aéronef.

De plus, bien que les réalisations du film et du kit consistent en certaines configurations géométriques, tel qu'expliqué et décrit ci-dessus, seulement une portion de ces composants et géométries est essentielle et ainsi la majorité de ceux-ci ne doit pas être interprétée dans un sens restrictif. Tel qu'apparent pour une personne versée dans l'art, d'autres composants et coopération entre ceux-ci, ainsi que d'autres configurations géométriques, peuvent être utilisés pour le film et le kit, tel que brièvement expliqué ci-dessus et tel qu'il est possible de l'inférer pour une personne versée dans l'art. De plus, il est apprécié que les positions de la description, telles que «au-dessus », « en-dessous », « à gauche », « à droite », et autres positions similaires, doivent être interprétées dans le contexte des figures, à moins que spécifié autrement, et ne doivent pas être considérées limitantes.

Plusieurs réalisations alternatives et exemples ont été décrits et illustrés ci-dessus. Les réalisations de l'invention décrites ci-dessus sont uniquement des exemples. Une personne versée dans l'art appréciera les caractéristiques des réalisations individuelles, ainsi que les combinaisons et variations possibles des composants. Une personne versée dans l'art appréciera également que n'importe quelle des réalisations peut être réalisée dans n'importe quelle combinaison avec les autres réalisations décrites ci-dessus. Il est apprécié que l'invention puisse être réalisée dans d'autres formes spécifiques sans se départir des caractéristiques principales de celle-ci. Les exemples et réalisations décrits doivent être considérés dans tous les aspects comme illustratifs et non-restrictifs, et l'invention n'est pas limitée aux détails donnés. La portée de l'invention est, ainsi, limitée uniquement par la portée des revendications.

## Revendications

1. Un film (20, 30) pour masquer un nez d'aéronef, le film ayant une portion longitudinale et une portion transversale et étant configuré pour recouvrir ledit nez d'aéronef, le film étant conditionné sur ladite portion longitudinale par une opération de pliage en accordéon, sur ladite portion transversale par une opération de pliage en accordéon, et suivie, sur ladite portion transversale, par une opération de pliage en portefeuille.

2. Un film (20, 30, 40) pour masquer un fuselage d'aéronef, le film ayant une portion longitudinale et une portion transversale et étant configuré pour recouvrir ledit fuselage d'aéronef, le film étant conditionné sur ladite portion longitudinale par une opération de pliage en accordéon suivie, sur ladite portion transversale, par une opération de pliage choisie parmi un pliage en accordéon et un pliage roulé, et suivie, sur ladite portion transversale, par une opération de pliage en portefeuille.

3. Un film (20, 30, 50) pour masquer une aile d'aéronef, le film ayant une portion longitudinale et une portion transversale et étant configuré pour former un manchon (101) substantiellement tubulaire pour recouvrir ladite aile d'aéronef et étant conditionné sur ladite portion longitudinale par une opération de pliage télescopique formant un parallélogramme, suivie, sur ladite portion transversale, par une opération de pliage choisie parmi un pliage en accordéon et un pliage roulé.

4. Le film selon la revendication 3, le conditionnement du film sur ladite portion transversale par ladite opération de pliage choisie parmi le pliage en accordéon et le pliage roulé étant réalisé selon une direction substantiellement parallèle à une base du parallélogramme.

5. Le film selon la revendication 4, ladite base s'étendant substantiellement perpendiculairement à ladite portion longitudinale.

6. Le film selon la revendication 4 ou 5, ledit manchon ayant une extrémité ouverte et une extrémité fermée longitudinalement opposée à l'extrémité ouverte.

7. Le film selon la revendication 6, le film étant conditionné selon ladite direction parallèle par une opération parmi un pliage en accordéon et un pliage roulé pour former une première section empilée, suivie par une opération de pliage en accordéon selon ladite direction parallèle pour former une deuxième section empilée, et par une opération de pliage en portefeuille des première et deuxième sections empilées selon ladite direction parallèle.

8. Le film selon la revendication 6 ou 7, le film étant conditionné par une opération de pliage simple de ladite extrémité fermée selon une direction substantiellement perpendiculaire à ladite base dudit parallélogramme.

9. Le film selon l'une quelconque des revendications 1 à 8, le film ayant une propriété antistatique.

10. Le film selon l'une quelconque des revendications 1 à 9, le film étant perméable à l'air et aux vapeurs de solvant.

11. Le film selon l'une quelconque des revendications 1 à 10, le film étant imperméable à la peinture, à l'eau et aux solvants.

12. Le film selon l'une quelconque des revendications 1 à 11, le film ayant des propriétés permettant l'adhérence d'enduits sur le film.

13. Le film selon l'une quelconque des revendications 1 à 12, le film étant transparent.

14. Le film selon l'une quelconque des revendications 1 à 13, le film ayant une face interne et une face externe, le film comportant des repères de positionnement sur une des faces interne et externe du film, lesdits repères étant positionnés suivant des caractéristiques géométriques dudit composant.

15. Le film selon la revendication 14, lesdits repères incluant un ruban choisi parmi les suivants : un ruban coloré, un ruban imprimé, un ruban translucide, le ruban comportant optionnellement des pointillés perforés formant une ligne de déchirement adaptée pour former des segments détachables de film.

16. Un kit pour masquer un composant d'aéronef, le kit comprenant un film conditionné pour masquer ledit composant selon l'une quelconque des revendications 1 à 15, et un élément guide (42) conditionné juxtaposé audit film conditionné pour le déploiement ultérieur dudit film conditionné sur ledit composant.

17. Le kit selon la revendication 16, ledit élément guide étant rigide.

18. Le kit selon la revendication 16 ou 17, le kit comprenant un mode d'emploi pour le déploiement du film.

19. Une méthode pour masquer un composant d'aéronef utilisant le kit selon l'une quelconque des revendications 16 à 18.

20. Une méthode de conditionnement d'un film pour masquer un nez d'aéronef, le film ayant une portion longitudinale et une portion transversale, la méthode comprenant :
- le conditionnement de ladite portion longitudinale par une opération de pliage en accordéon; et
- le conditionnement de ladite portion transversale par une opération de pliage en accordéon, suivie, sur ladite portion transversale, par une opération de pliage en portefeuille.

21. Une méthode de conditionnement d'un film pour masquer un fuselage d'aéronef, le film ayant une portion longitudinale et une portion transversale, la méthode comprenant :
- le conditionnement de ladite portion longitudinale par une opération de pliage en accordéon; et
- le conditionnement de ladite portion transversale par une opération de pliage choisie parmi un pliage en accordéon et un pliage roulé, et suivie, sur ladite portion transversale, par une opération de pliage en portefeuille.

22. Une méthode de conditionnement d'un film pour masquer une aile d'aéronef, le film ayant une portion longitudinale et une portion transversale et étant configuré pour former un manchon substantiellement tubulaire, la méthode comprenant :
- le conditionnement de ladite portion longitudinale par une opération de pliage télescopique formant un parallélogramme; suivi par
- le conditionnement de ladite portion transversale par une opération de pliage choisie parmi un pliage en accordéon, un pliage roulé, un pliage en portefeuille, un enroulement autour d'un mandrin et un enroulement du film autour de lui-même.

## Patentansprüche

1. Folie (20, 30) zum Abdecken einer Flugzeugnase, wobei die Folie einen Längsabschnitt und einen Querabschnitt aufweist und konfiguriert ist, um die Flugzeugnase abzudecken, wobei die Folie an dem Längsabschnitt durch einen Zickzack-Faltvorgang, an dem Querabschnitt durch einen Zickzack-Faltvorgang und anschließend an dem Querabschnitt durch einen Brieftaschen-Faltvorgang konditioniert wird.

2. Folie (20, 30, 40) zum Abdecken eines Flugzeugrumpfs, wobei die Folie einen Längsabschnitt und einen Querabschnitt aufweist und konfiguriert ist, um den Flugzeugrumpf abzudecken, wobei die Folie an dem Längsabschnitt durch einen Zickzack-Faltvorgang konditioniert ist, gefolgt, an dem Querabschnitt, von einem Faltvorgang, der ausgewählt ist aus einem Zickzack-Faltvorgang und einem Roll-Faltvorgang, und gefolgt, an dem Querabschnitt, von einem Brieftaschen-Faltvorgang.

3. Folie (20, 30, 50) zum Abdecken eines Flugzeugflügels, wobei die Folie einen Längsabschnitt und einen Querabschnitt aufweist und konfiguriert ist, um eine im Wesentlichen rohrförmige Hülse (101) zum Abdecken des Flugzeugflügels zu bilden, und an dem Längsabschnitt durch einen Teleskop-Faltvorgang konditioniert ist, der ein Parallelogramm bildet, gefolgt, an dem Querabschnitt, von einem Faltvorgang, der ausgewählt ist aus einer Zickzack-Faltung und einer Roll-Faltung.

4. Folie nach Anspruch 3, wobei das Konditionieren der Folie an dem Querabschnitt durch den Faltvorgang, der ausgewählt ist aus Zickzack-Faltung und Roll-Faltung, in einer Richtung erfolgt, die im Wesentlichen parallel zu einer Basis des Parallelogramms ist.

5. Folie nach Anspruch 4, wobei sich die Basis im Wesentlichen senkrecht zu dem Längsabschnitt erstreckt.

6. Folie nach Anspruch 4 oder 5, wobei die Hülse ein offenes Ende und ein geschlossenes Ende in Längsrichtung gegenüber dem offenen Ende aufweist.

7. Folie nach Anspruch 6, wobei die Folie in der parallelen Richtung durch einen Vorgang einer Zickzack-Faltung oder einer Roll-Faltung konditioniert ist, um einen ersten gestapelten Abschnitt zu bilden, gefolgt von einem Vorgang einer Zickzack-Faltung in der parallelen Richtung, um einen zweiten gestapelten Abschnitt zu bilden, und durch einen Vorgang einer Brieftaschen-Faltung des ersten und zweiten gestapelten Abschnitts in der parallelen Richtung.

8. Folie nach Anspruch 6 oder 7, wobei die Folie durch einen einfachen Faltvorgang des geschlossenen Endes in einer Richtung verpackt wird, die im Wesentlichen senkrecht zu der Basis des Parallelogramms ist.

9. Folie nach einem der Ansprüche 1 bis 8, wobei die Folie eine antistatische Eigenschaft aufweist.

10. Folie nach einem der Ansprüche 1 bis 9, wobei die Folie für Luft und Lösungsmitteldämpfe durchlässig ist.

11. Folie nach einem der Ansprüche 1 bis 10, wobei die Folie lack-, wasser- und lösungsmittelundurchlässig ist.

12. Folie nach einem der Ansprüche 1 bis 11, wobei die Folie Eigenschaften aufweist, die ein Anhaften von Beschichtungen an der Folie ermöglichen.

13. Folie nach einem der Ansprüche 1 bis 12, wobei die Folie transparent ist.

14. Folie nach einem der Ansprüche 1 bis 13, wobei die Folie eine Innenseite und eine Außenseite aufweist, die Folie umfassend Positionierungsmarkierungen auf einer von der Innen- und der Außenseite der Folie, wobei die Markierungen gemäß den geometrischen Merkmalen der Komponente positioniert sind.

15. Folie nach Anspruch 14, wobei die Markierungen ein Band beinhalten, das aus den folgenden ausgewählt ist: ein farbiges Band, ein bedrucktes Band, ein lichtdurchlässiges Band, wobei das Band optional perforierte Punktierungen umfasst, die eine Abreißlinie bilden, die angepasst ist, um abtrennbare Segmente der Folie zu bilden.

16. Kit zum Abdecken einer Flugzeugkomponente, das Kit umfassend eine verpackte Folie zum Abdecken der Komponente nach einem der Ansprüche 1 bis 15 und ein konditioniertes Führungselement (42) neben der verpackten Folie für das anschließende Entfalten der verpackten Folie auf der Komponente.

17. Kit nach Anspruch 16, wobei das Führungselement starr ist.

18. Kit nach Anspruch 16 oder 17, wobei das Kit eine Bedienungsanleitung zum Entfalten der Folie umfasst.

19. Verfahren zum Abdecken einer Flugzeugkomponente unter Verwendung des Kits nach einem der Ansprüche 16 bis 18.

20. Konditionierungsverfahren einer Folie zum Abdecken einer Flugzeugnase, wobei die Folie einen Längsabschnitt und einen Querabschnitt aufweist, das Verfahren umfassend:
- das Konditionieren des Längsabschnitts durch einen Zickzack-Faltvorgang; und
- das Konditionieren des Querabschnitts durch einen Zickzack-Faltvorgang, gefolgt, auf dem Querabschnitt, von einem Brieftaschen-Faltvorgang.

21. Konditionierungsverfahren einer Folie zum Abdecken eines Flugzeugrumpfs, wobei die Folie einen Längsabschnitt und einen Querabschnitt aufweist, das Verfahren umfassend:
- das Konditionieren des Längsabschnitts durch einen Zickzack-Faltvorgang; und
- das Konditionieren des Querabschnitts durch einen Faltvorgang, der ausgewählt ist aus Zickzack-Faltung und Roll-Faltung, und gefolgt, an dem Querabschnittteil, von einem Brieftaschen-Faltvorgang.

22. Konditionierungsverfahren einer Folie zum Abdecken eines Flugzeugflügels, wobei die Folie einen Längsabschnitt und einen Querabschnitt aufweist und konfiguriert ist, um eine im Wesentlichen rohrförmige Hülse bildet, das Verfahren umfassend:
- Konditionieren des Längsabschnitts durch einen Teleskop-Faltvorgang, der ein Parallelogramm bildet; gefolgt von
- das Konditionieren des Querabschnitts durch einen Faltvorgang, der ausgewählt ist aus Zickzack-Faltung, Roll-Faltung, Brieftaschen-Faltung, Wickeln um einen Dorn und Wickeln der Folie um sich selbst.

## Claims

1. A film (20, 30) for masking an aircraft nose, the film having a longitudinal portion and a transverse portion and being configured to cover said aircraft nose, the film being packaged on said longitudinal portion by an accordion folding operation, on said transverse portion by an accordion folding operation, and followed, on said transverse portion, by a wallet folding operation.

2. A film (20, 30, 40) for masking an aircraft fuselage, the film having a longitudinal portion and a transverse portion and being configured to cover said aircraft fuselage, the film being packaged on said longitudinal portion by an accordion folding operation, followed, on said transverse portion, by a folding operation chosen from among an accordion folding operation and tri-folding, and followed, on said transverse portion, by a wallet folding operation.

3. A film (20, 30, 50) for masking an aircraft wing, the film having a longitudinal portion and a transverse portion and being configured to form a substantially tubular sleeve (101) for covering said aircraft wing and being packaged on said longitudinal portion by a telescopic folding operation forming a parallelogram, followed, on said transverse portion, by a folding operation selected from an accordion fold and a tri-fold.

4. The film according to claim 3, the packaging of the film on said transverse portion by said folding operation selected from accordion folding and tri-folding being performed along a direction substantially parallel to a base of the parallelogram.

5. The film according to claim 4, said base extending substantially perpendicular to said longitudinal portion.

6. The film according to claim 4 or 5, said sleeve having an open end and a closed end longitudinally opposite the open end.

7. The film according to claim 6, the film being packaged in said parallel direction by either an accordion folding operation or a tri-folding operation to form a first stacked section, followed by an accordion folding operation in said parallel direction to form a second stacked section, and by a wallet folding operation of the first and second stacked sections in said parallel direction.

8. The film according to claim 6 or 7, the film being packaged by a single folding operation of said closed end in a direction substantially perpendicular to said base of said parallelogram.

9. The film according to any one of claims 1 to 8, the film having an antistatic property.

10. The film according to any one of claims 1 to 9, the film being permeable to air and solvent vapours.

11. The film according to any one of claims 1 to 10, the film being impermeable to paint, water, and solvents.

12. The film according to any one of claims 1 to 11, the film having properties allowing coatings to adhere to the film.

13. The film according to any one of claims 1 to 12, the film being transparent.

14. The film according to any one of claims 1 to 13, the film having an inner face and an outer face, the film having positioning marks on either the inner or outer face of the film, said marks being positioned in accordance with geometrical features of said component.

15. The film according to claim 14, said markings including a tape selected from the following: a coloured tape, a printed tape, a translucent tape, the tape optionally having perforated dots forming a tear line adapted to form detachable film segments.

16. A kit for masking an aircraft component, the kit comprising a packaged film for masking said component according to any one of claims 1 to 15, and a packaged guide member (42) juxtaposed onto said packaged film for subsequent deployment of said packaged film onto said component.

17. The kit according to claim 16, said guide member being rigid.

18. The kit according to claim 16 or 17, the kit comprising instructions for deployment of the film.

19. A method of masking an aircraft component using the kit according to any of claims 16 to 18.

20. A method of packaging a film for masking an aircraft nose, the film having a longitudinal portion and a transverse portion, the method comprising:
- packaging said longitudinal portion by an accordion folding operation; and
- packaging said transverse portion by an accordion folding operation, followed, on said transverse portion, by a wallet folding operation.

21. A method of packaging a film for masking an aircraft fuselage, the film having a longitudinal portion and a transverse portion, the method comprising:
- packaging said longitudinal portion by an accordion folding operation; and
- packaging said transverse portion a folding operation selected from an accordion fold and a tri-fold, and followed, on said transverse portion, by a wallet folding operation.

22. A method of packaging a film for masking an aircraft wing, the film having a longitudinal portion and a transverse portion and being configured to form a substantially tubular sleeve, the method comprising:
- packaging said longitudinal portion by a telescopic folding operation forming a parallelogram; followed by
- packaging said transverse portion by a folding operation selected from accordion folding, tri-folding, wallet folding, wrapping around a spindle and wrapping the film around itself.
